# EUROPEAN PATENT SPECIFICATION

(11) **EP 2 503 069 B1**
(45) Date of publication and mention of the grant of the patent: **14.10.2015**
(21) Application number: 12159746.2
(22) Date of filing: 15.03.2012
(51) Int. Cl.: E03B 7/07, E03C 1/10

(54) **Backflow preventer for installation between a sanitary appliance and water mains**
Rückflussverhinderer zur Installation zwischen Sanitäranlage und Wasserversorgung
Dispositif anti-retour pour l'installation entre l'appareil sanitaire et l'approvisionnement en eau

(30) Priority: 22.03.2011 CN 201110071501
(43) Date of publication of application: 26.09.2012
(73) Proprietor: Li, Feiyu, Fujian 361000 (CN)
(72) Inventor: Li, Feiyu, Fujian 361000 (CN)
(74) Representative: Hanna, Peter William Derek

(56) References cited:
- US-A- 6 024 113

## Description

### Technical Field

The invention relates to an accessory to a sanitary system, particularly to a flow-checking device connected between a sanitary system and a running water system.

### Background

Conventional sanitary systems need a water source for a flushing function, which typically comprises a connection to a water supply system, for example a running water system. In other words, the conventional sanitary systems could not work without such a running water system. In particular, a conventional flushing toilet is typically provided with a water tank fed from a running water system. Another conventional toilet is provided with a flushing outlet connected to a running water system. A conventional shower is typically connected to such a running water system. As the sanitary systems are connected directly to the running water system, a possible polluted water source could be drawn upstream by a backpressure or suction to the running water system, and hence pollute the running water.

### Summary of the Invention

The present invention provides a flow-checking device connected in use between a sanitary system and a running water system, in accordance with claims which follow.

To overcome the disadvantages of the prior art, the invention provides a flow-checking device according to claim 1.

Preferably, the liquid-level sensor comprises a lower liquid-level sensor so that when the liquid-level sensor senses that the liquid level of the tank is lower than the predetermined liquid level, the control circuitry has the electric valve open until the liquid level of the tank reaches said higher liquid level between the maximum liquid level and the predetermined liquid level.

Alternatively, the liquid-level sensor comprises an upper liquid-level sensor so that when the liquid-level sensor senses that the liquid level of the tank is lower than the predetermined liquid level, the control circuitry has the electric valve open until the liquid level of the tank reaches the predetermined liquid level.

### Brief Description of the Drawings

Fig. 1 perspectively shows a first embodiment of the invention;
Fig. 2 also shows the first embodiment of the invention in another perspective;
Fig. 3 shows the first embodiment of the invention explosively;
Fig. 4 shows the structure of the first embodiment of the invention;
Fig. 5 illustrates a control diagram of the first embodiment of the invention;
Fig. 6 shows a second embodiment of the invention provided with a water discharge;
Fig. 7 shows a third embodiment of the invention provided with another water discharge;
Fig. 8 shows a fourth embodiment of the invention provided with an overflowing passage;
Fig. 9 shows a fifth embodiment of the invention provided with another overflowing passage;
Fig. 10 shows a sixth embodiment of the invention providing a tank with a vent;
Fig. 11 shows a seventh embodiment of the invention providing a tank with another vent;
Fig. 12 shows an eighth embodiment of the invention provided with a baffle;
Fig. 13 shows another control diagram of a ninth embodiment of the invention; and
Fig. 14 shows still another control diagram of a tenth embodiment of the invention.

### Particular Embodiments

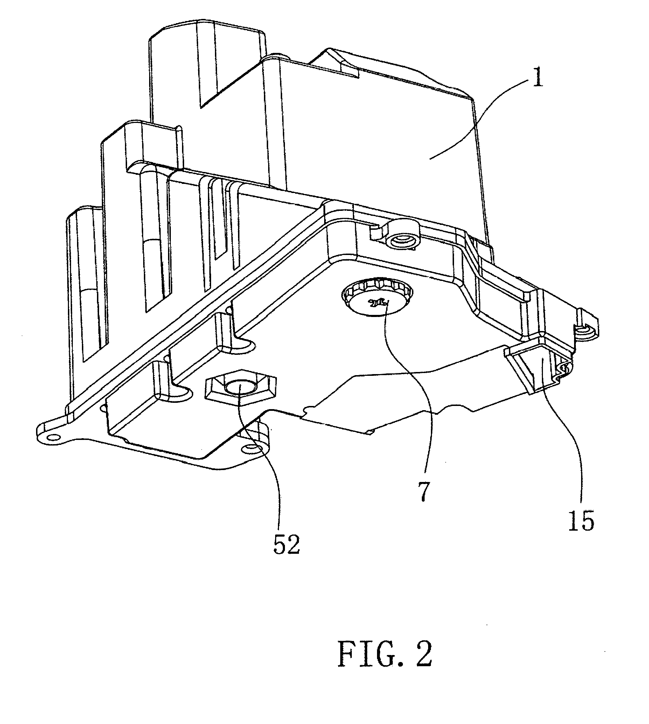

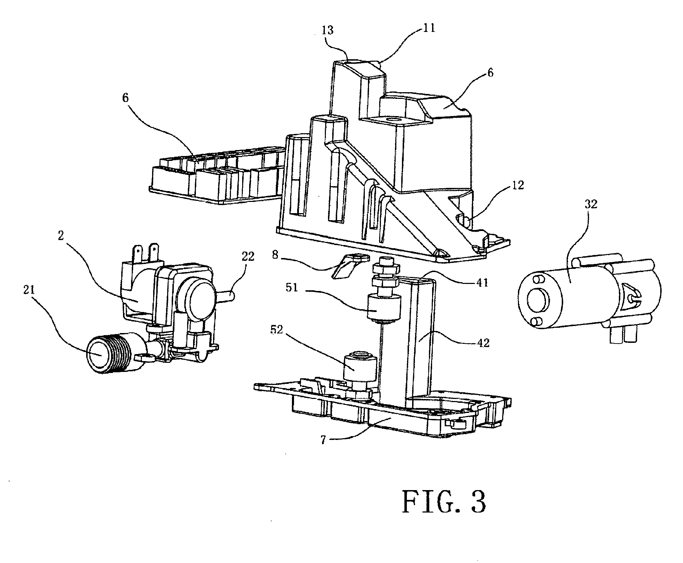

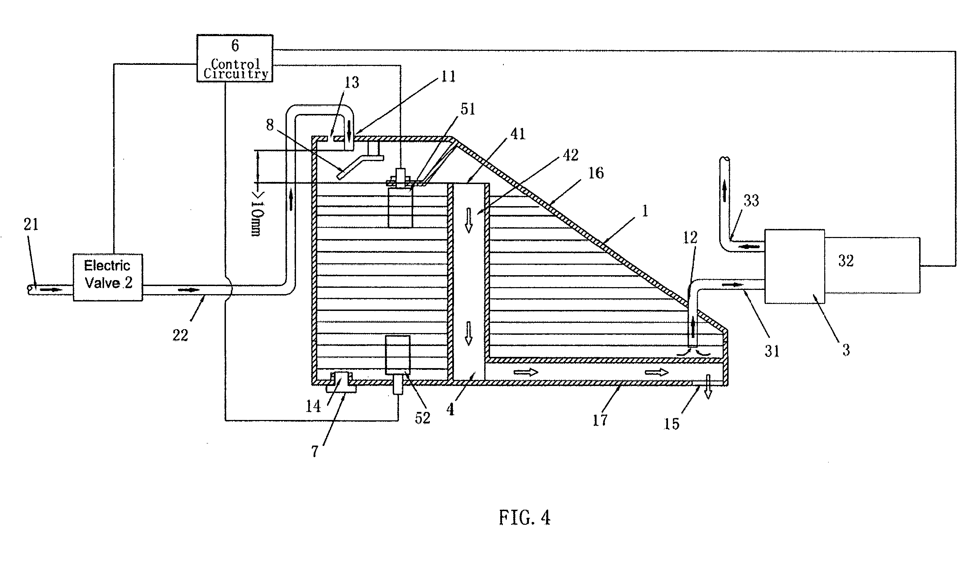

Fig. 1 to Fig. 5 provide a flow-checking device connected between a sanitary system and a running water system, comprising:
a tank 1, which comprises a water inlet port 11 formed in an upper portion of the tank or through the top thereof as shown particularly and a water outlet port 12;
an electric valve 2, which comprises a valve inlet connected to a running water pressure source 21 or the running water system, and a valve outlet connected to the water inlet port 11 of the tank;
a water discharge 3 connected to the water outlet port 12 of the tank;
an overflowing passage 4 for defining a maximum water level in the tank, which has an overflowing inlet 41 communicated fluidly with the chamber of the tank, and an overflowing outlet communicated to the outside of the tank 1 or the atmosphere;
a set of sensors disposed inside the chamber of the tank, including an upper liquid-level sensor 51 and a lower liquid-level sensor 52; and
a control circuitry 6 disposed outside or inside the tank, which comprises an input from the upper liquid-level sensor 51 and/or the lower liquid-level sensor52 for checking the water level in the chamber of the tank 1 and an output to the electric valve 2 for opening or shutting the electric valve 2;
wherein there is a vertical space provided between the water inlet port 11 of the tank 1 and the overflowing inlet 41 of the overflowing passage 4.

Preferably, a vent 13 is formed in an upper portion of a wall of the tank 1, more preferably through the top thereof, so as to communicate the chamber of the tank 1 with the atmosphere.

Preferably, a dead water drain port 14 is formed through the bottom of the tank and inserted removably with a sealing plug, for example, a sealing screw 7.

More preferably, the sealing plug may be configured otherwise, for example, a sealing elastomeric plug or a resiliently-pressed sealing gasket.

Said water discharge 3 comprises a pump 32 having a pump inlet, and a first pipeline 31 connected between the pump inlet of the pump 32 and the water outlet port of the tank 1 and having a pipeline inlet, which is disposed above the bottom of the tank 1 where the water outlet port 12 of the tank 1 is not formed through the bottom of the tank 1. The tank is discharged into the pipeline inlet of the first pipeline 31. The pump 32 has a pump outlet connected operatively to the sanitary system through a third pipeline 33. The control circuitry 6 has another output connected electrically to the pump 32 so that the control circuitry 6 can control the pump 32 operatively.

The overflowing passage 4 comprises an overflowing port 15 formed through the bottom of the tank, and an internal overflowing conduit 42 disposed in the chamber of the tank and having a lower end connected to the overflowing port 15. The overflowing inlet 41 of the overflowing passage 4 is the water inlet of the overflowing conduit 42, while the overflowing outlet of the overflowing passage 4 may be the overflowing port 15 of the tank 1. Therefore in the tank 1, any water above the overflowing inlet of the overflowing conduit 42 flows through the overflowing passage 4 to the outside of the tank 1.

The tank 1 is a trapezoid as shown, or may be of any another shape.

The tank 1 comprises an upper case 16 and a lower case 17 fit sealingly with the upper case 16 so that the tank 1 can hold a volume of water.

The upper case 16 and the lower case 17 may be fit sealingly with each other in various manners. For example, a sealing gasket may be sandwiched between the upper case 16 and the lower case 17; and the upper case 16 and the lower case 17 may be welded to each other; and in case of a cylindrical tank 1, the upper case 16 and the lower case 17 may be fit mechanically to each other by means of fasteners.

Preferably, a baffle 8 is provided under the water inlet port 11 of the tank 1, for baffling a rushing water flow from the water inlet port.

The water inlet port 11 of the tank may be formed vertically through the top of the tank, and the valve outlet of the electric valve 2 goes on to a second pipeline 22 fitted through the vertically oriented inlet port 11 of the tank and having another end portion or pipeline outlet portion inserted into the chamber of the tank. The water inlet port of the tank or the pipeline outlet of the second pipeline and the overflowing inlet 41 of the overflowing passage should be vertically spaced with a vertical distance in a range of 10 mm or more, preferably 20 mm.

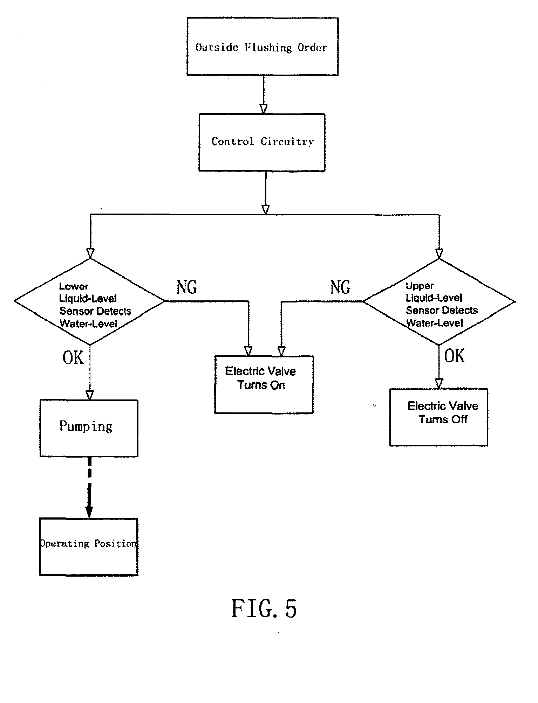

The control circuitry 6 is connected to an outside trigger or switch. A control diagram is shown in Fig. 5.

Once the outside button or switch is triggered to instruct a flushing order, which is in turn transmitted to the control circuitry 6. When the control circuitry 6 receives the flushing order, the upper liquid-level sensor 51 and/or the lower liquid-level sensor 52 check the liquid level in the tank, particularly the lower liquid-level sensor 52 finds that the liquid level is above or at a desired level and send a desired signal to the control circuitry 6, the control circuitry 6 will command the pump 32 to pump or flush the water from the tank.

Once the outside button or switch is triggered to instruct a flushing order, which is in turn transmitted to the control circuitry 6. When the control circuitry 6 receives the flushing order, the upper liquid-level sensor 51 and/or the lower liquid-level sensor 52 check the liquid level in the tank, particularly the lower liquid-level sensor 52 finds that the liquid level is below a desired level or lower than the desired and send a lower-level signal to the control circuitry 6, the control circuitry 6 will command the electric valve 2 to turn on feeding water into the chamber of the tank 1. As the feeding goes on, when the lower liquid-level sensor 52 checks that the liquid level reaches the desired level and send a desired signal to the control circuitry, the control circuitry 6 will command the pump 32 to pump or flush the water from the tank. When the lower liquid-level sensor 52 finds that the liquid level is still below a desired level or lower than the desired and send a lower-level signal to the control circuitry 6, the control circuitry 6 will command the electric valve 2 to go on feeding water into the chamber of the tank 1.

Once the outside button or switch is triggered to instruct a flushing order, which is in turn transmitted to the control circuitry 6. When the control circuitry 6 receives the flushing order, the upper liquid-level sensor 51 and/or the lower liquid-level sensor 52 check the liquid level in the tank, particularly the lower liquid-level sensor 52 finds that the liquid level is below a desired level or lower than the desired and send a lower-level signal to the control circuitry 6, the control circuitry 6 will command the electric valve 2 to turn on feeding water into the chamber of the tank 1. As the feeding goes on, when the lower liquid-level sensor 52 checks that the liquid level reaches the desired level and send a desired signal to the control circuitry, the control circuitry 6 will command the pump 32 to pump or flush the water from the tank. On the other hand, when the upper level sensor 51 senses that the current liquid level reaches a predetermined or higher level, the control circuitry 6 will command and shut the electric valve 2 to stop feeding water into the tank. Meanwhile, the pump works on, until the lower liquid-level sensor 52 senses a lower liquid level and the control circuitry 6 thus command and open the electric valve 2 to start feeding water into the chamber of the tank 1. When the upper level sensor 51 senses that the current liquid level reaches said predetermined or higher level, the control circuitry 6 will command and shut the electric valve 2 to stop feeding water into the tank. As the above procedure goes on and repeats, until the outside button is triggered to stop the flushing order or the procedure goes up to a period set in the control circuitry 6, which receives a flush-stopping order or shut the electric valve 2 and the pump according to the settings, meaning that the flushing is finished.

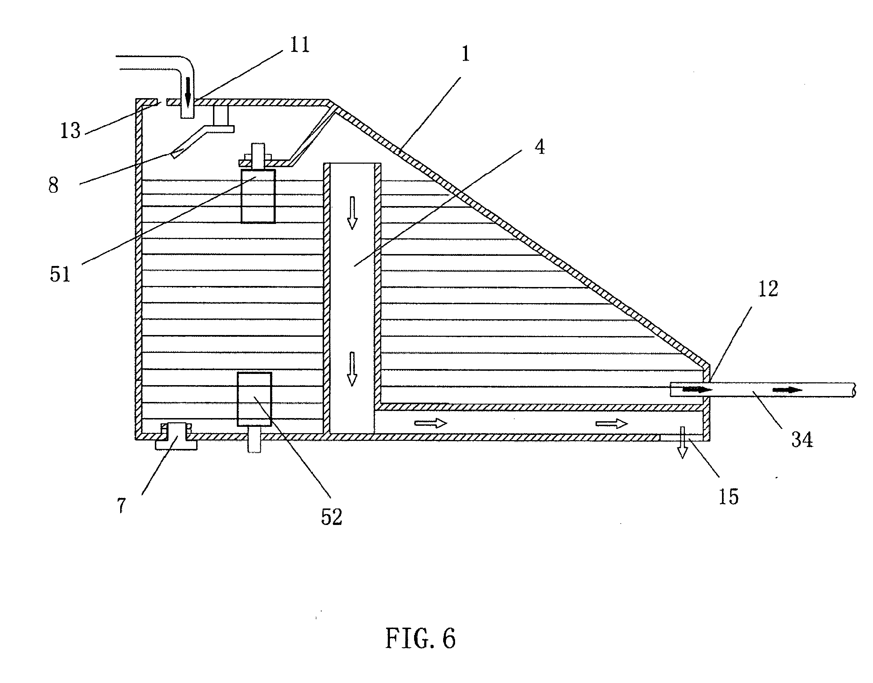

According to a second embodiment of the invention as shown in Fig. 6, it is different from the first embodiment in that it uses a different water discharge. The water discharge comprises a gravitationally water discharging pipe 34. Particularly, the water outlet port 12 of the tank is formed at the bottom of the tank 1, while the water discharging pipe 34 is fit with the water outlet port 12 formed at the bottom of the tank. This particular embodiment discharges the water gravitationally from the tank 1.

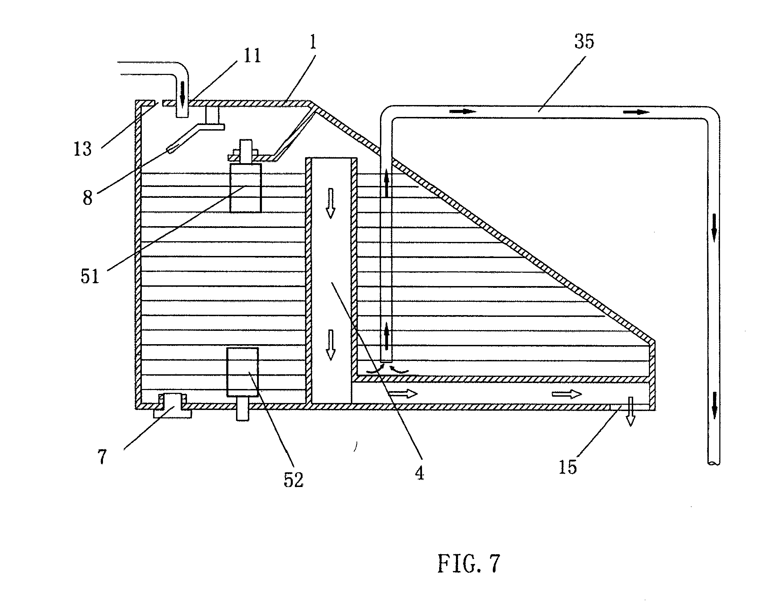

According to a third embodiment of the invention as shown in Fig. 7, it is different from the first embodiment in that it uses another different water discharge. The water discharge comprises a suction pipe 35 which is fit with the water outlet port 12 formed through the top of the tank. This particular embodiment discharges the water from the tank 1 by means a siphoning function.

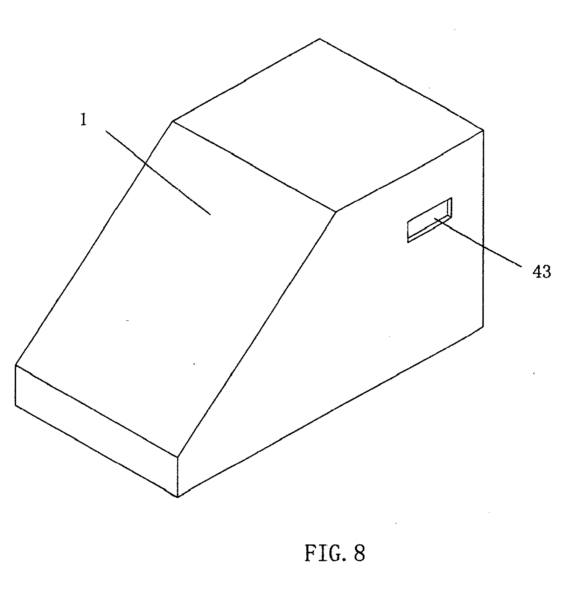

According to a fourth embodiment of the invention as shown in Fig. 8, it is different from the first embodiment in that the overflowing passage comprises a direct draining passage or port 43 which is formed through the vertical wall of the tank and through which the water above the maximum level can overflow to the outside of the tank.

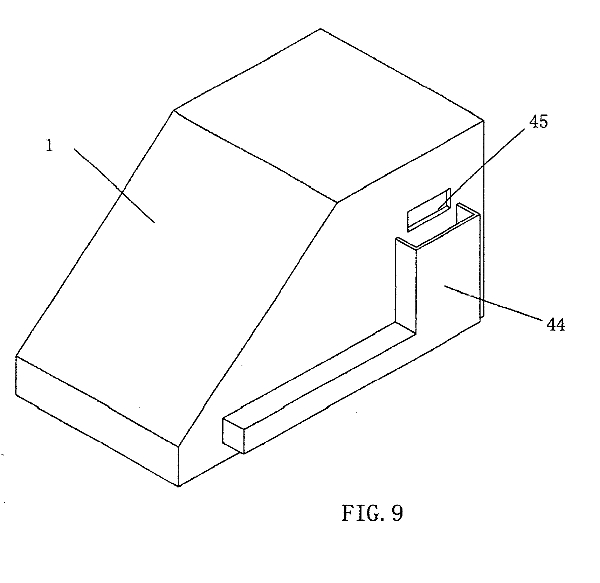

According to a fifth embodiment of the invention as shown in Fig. 9, it is different from the first embodiment in that it uses a different overflowing passage comprising an overflowing port 45 formed through the vertical wall of the tank and an overflowing conduit 44 disposed externally of the tank and having an upper end fit with the overflowing port 45. The water above the maximum level can overflow to the outside of the tank through the overflowing port 45 and the externally disposed overflowing conduit 44.

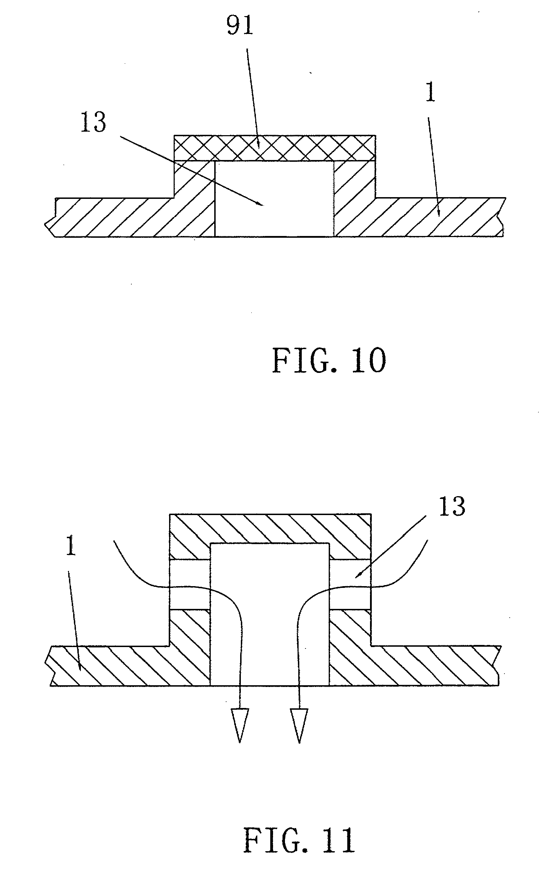

According to a sixth embodiment of the invention as shown in Fig.10, it is different from the first embodiment in that it has a differently structured vent 13 comprising a dust screen or filter 91.

According to a seventh embodiment of the invention as shown in Fig.11, it is different from the first embodiment in that it has a differently structured vent comprising a horizontally oriented vent hole.

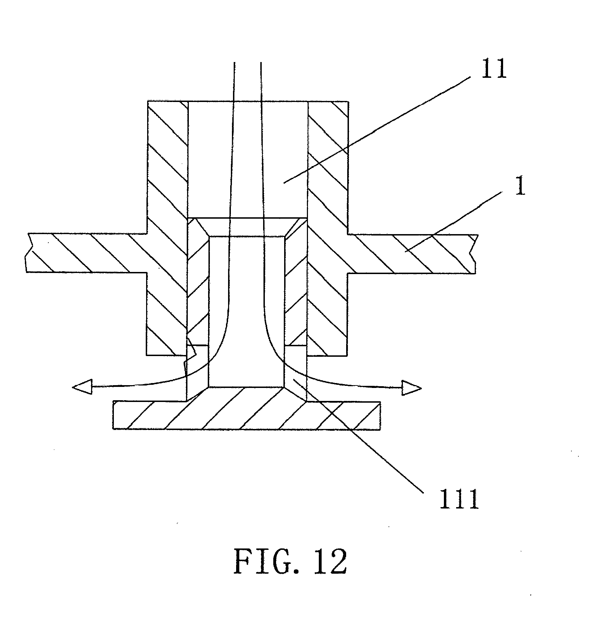

According to an eighth embodiment of the invention as shown in Fig.12, it is different from the first embodiment in that it has a differently oriented baffle. The outlet portion of the second pipeline to which the valve outlet of the electric valve 2 is connected, is fit with a horizontally oriented baffle 111, which is spaced from the overflowing inlet 41 of the overflowing passage at a vertical distance in the range of 10 mm or more, preferably 20 mm or more.

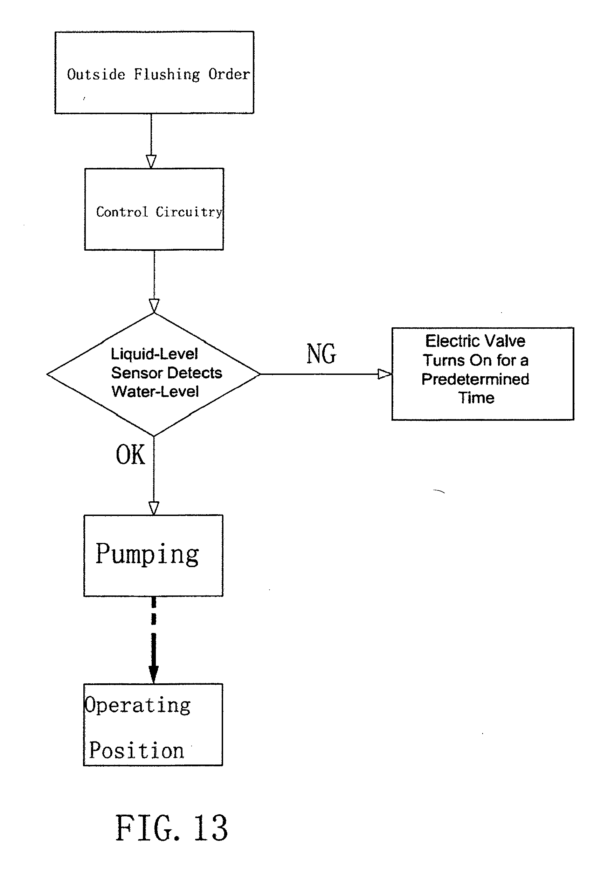

According to a ninth embodiment of the invention as shown in Fig.13, it is different from the first embodiment in that it uses only one liquid-level sensor, which is disposed in a lower portion of the chamber of the tank and operates similarly to the operation of the lower liquid-level sensor of the first embodiment. When the liquid-level sensor senses that the liquid level in the tank is below or lower than a desired level, and then send a lower-level signal to the control circuitry, the control circuitry will command the electric valve to turn on feeding water into the tank. The feeding volume is controlled by the electric valve, depending on a feeding period set in the control circuitry.

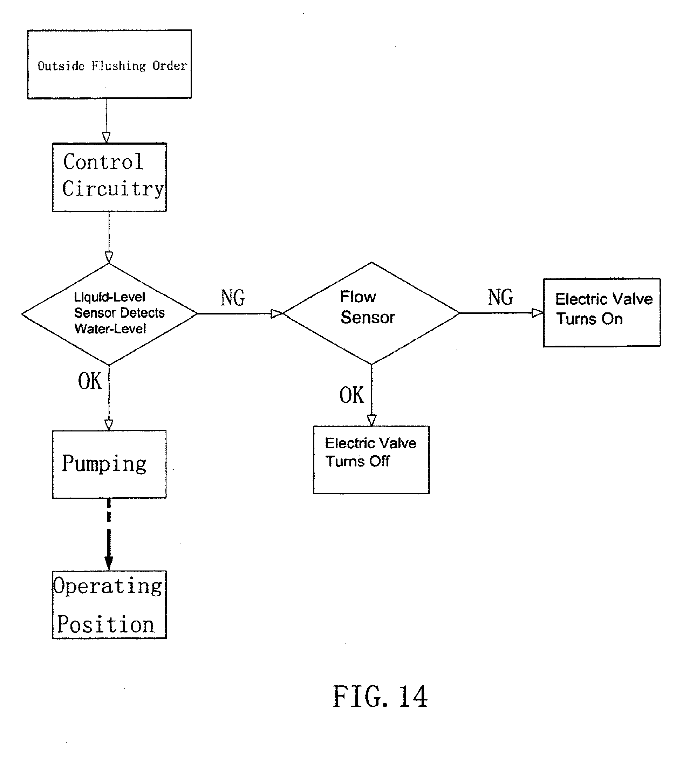

According to a tenth embodiment of the invention as shown in Fig.14, it is different from the first embodiment in that it uses only one liquid-level sensor disposed in a lower portion of the chamber of the tank and a flow sensor for sensing the water flow through the water inlet of the tank. When the liquid-level sensor senses that the liquid level in the tank is below or lower than a desired level, and then send a lower-level signal to the control circuitry, the control circuitry will command the electric valve to turn on feeding water into the tank. The feeding volume is controlled by the control circuitry according to the flow sensor. The electric valve is kept open until a predetermined volume is fed into the tank; when the control circuitry calculates that the predetermined volume has been fed into the tank, the control circuitry will shut the electric valve to stop the feeding.

Alternatively, the present invention may use only one liquid-level sensor which is disposed in an upper portion of the chamber of the tank and operates similarly to the operation of the upper liquid-level sensor 51 of the first embodiment. Once the outside button is triggered, said one level sensor checks if the current liquid level in the tank is located at a higher liquid level. If so, the control circuitry 6 will turn on the pump. If it is below or lower than said higher level, the control circuitry will open the electric valve 2 to feed the tank 1, until the current liquid level arrives at said higher level. Upon the arrival, the pump will work on the flushing procedure. Preferably, the control circuitry measures the pumping time. When the pumping time goes on over a set pumping time, the electric valve will be opened to feed the tank until the liquid-level sensor senses that the current liquid level reaches said higher level.

Preferably, the liquid-level sensor comprises a lower liquid-level sensor 52 so that when the liquid-level sensor senses that the liquid level of the tank is lower than the predetermined liquid level, the control circuitry 6 opens the electric valve 2 until the liquid level of the tank reaches said higher liquid level between the maximum liquid level and the predetermined liquid level.

Alternatively, the liquid-level sensor comprises an upper liquid-level sensor 51 so that when the liquid-level sensor senses that the liquid level of the tank is lower than the predetermined liquid level, the control circuitry opens the electric valve until the liquid level of the tank reaches the predetermined liquid level.

Alternatively, the liquid-level sensor comprises only one medium level sensor instead of the upper liquid-level sensor 51 and the lower liquid-level sensor 52 as illustrated previously and located therebetween. When the medium liquid-level sensor senses that the current water level is lower than a set liquid level in the tank 1, the control circuitry 6 will operate in the following manner: to open the electric valve 2 until the current liquid level in the tank 1 reaches the set liquid level or another higher liquid level between the set liquid level and the maximum liquid level as defined by the overflowing passage.

## Claims

1. A flow-checking device connectable between a sanitary system and a running water system, comprising:
a tank (1) having a water inlet port (11) provided at an upper portion of the tank and a water outlet port (12) for fluid communication with the sanitary system;
a valve (2) connectable between the water inlet port of the tank and the running water system (21) so as to regulate a water flow from the running water system to the water inlet port of the tank;
an overflowing passage (4) having an overflowing inlet (41) disposed inside the tank to define a maximum liquid level of the tank and an overflowing outlet (15) disposed outside the tank;
a liquid-level sensor (51,52) for sensing whether the liquid level of the tank is lower than a predetermined liquid level; and
wherein there is a vertical gap provided between the water inlet port (12) of the tank and the overflowing inlet (41) of the overflowing passage (4);
**characterized in that** the valve is an electric valve;
wherein the liquid-level sensor is adapted to sense that the liquid level of the tank has reached a higher liquid level between the maximum liquid level and the predetermined liquid level,
and **in that** the electric valve is provided with control circuitry (6) having an input from the liquid-level sensor and an output for controlling the electric valve (2);
wherein the control circuitry is adapted to open the electric valve if the liquid level of the tank reaches the predetermined liquid level or has reached a higher liquid level between the maximum liquid level and the predetermined liquid level.

2. A flow-checking device according to claim 1, wherein the liquid-level sensor comprises a lower liquid-level sensor (52) so that when the liquid-level sensor senses that the liquid level of the tank (1) is lower than the predetermined liquid level, the control circuitry (6) is adapted to open the electric valve (2) until the liquid level of the tank reaches said higher liquid level between the maximum liquid level and the predetermined liquid level.

3. A flow-checking device according to claim 1, wherein the liquid-level sensor comprises an upper liquid-level sensor (51) so that when the liquid-level sensor senses that the liquid level of the tank (1) is lower than the predetermined liquid level, the control circuitry (6) is adapted to open the electric valve (2) until the liquid level of the tank reaches the predetermined liquid level.

4. A flow-checking device according to claim 1, wherein the tank (1) has a top formed with a vent (13) for communicating the inside of the tank with the atmosphere.

5. A flow-checking device according to claim 1, wherein the tank (1) has a bottom formed with a dead water drain port (14) inserted removably with a sealing plug (7).

6. A flow-checking device according to claim 1, further comprising a pump (32) connected between the water outlet port (12) of the tank and the sanitary system and used for flushing the sanitary system.

7. A flow-checking device according to claim 1, wherein the overflowing passage (4) comprises a direct draining passage formed through the wall of the tank (1).

8. A flow-checking device according to claim 1, wherein the overflowing passage (4) comprises a direct draining passage formed through the bottom of the tank (1).

9. A flow-checking device according to claim 7, wherein the overflowing passage (4) comprises an overflowing conduit (42) disposed outside the tank (1).

10. A flow-checking device according to claim 1, wherein the tank (1) is provided with a baffle (8) under the water inlet port (11).

11. A flow-checking device according to any of claims 1 to 10, wherein the vertical gap is a vertical distance of 10 mm or more.

12. A flow-checking device according to claim 11, wherein the vertical distance is about 20 mm.

## Patentansprüche

1. Durchflussüberprüfungsvorrichtung, die zwischen einem Sanitärsystem und einem Fließwassersystem anschließbar ist, aufweisend:
einen Behälter (1) mit einer Wassereinlassöffnung (11), die an einem oberen Teil des Behälters vorgesehen ist, und mit einer Wasserauslassöffnung (12) zur Fluidverbindung mit dem Sanitärsystem;
ein Ventil (2), das zwischen der Wassereinlassöffnung des Behälters und dem Fließwassersystem (21) anschließbar ist, um einen Wasserdurchfluss vom Fließwassersystem zur Wassereinlassöffnung des Behälters zu regeln;
einen Überlaufkanal (4) mit einem Überlaufeinlass (41), der innerhalb des Behälters angeordnet ist, um einen maximalen Flüssigkeitsstand im Behälter zu definieren, und mit einem Überlaufauslass (15), der außerhalb des Behälters angeordnet ist;
einen Flüssigkeitsstandsensor (51, 52), um abzufühlen, ob der Flüssigkeitsstand im Behälter niedriger als ein vorbestimmter Flüssigkeitsstand ist; und
wobei ein vertikaler Spalt zwischen der Wassereinlassöffnung (12) des Behälters und dem Überlaufeinlass (41) des Überlaufkanals (4) vorgesehen ist,
**dadurch gekennzeichnet, dass** das Ventil ein elektrisches Ventil ist;
wobei der Flüssigkeitsstandsensor dafür ausgelegt ist, zu erkennen, dass der Flüssigkeitsstand im Behälter einen höheren Flüssigkeitsstand zwischen dem maximalen Flüssigkeitsstand und dem vorbestimmten Flüssigkeitsstand erreicht hat;
und dass das elektrische Ventil mit einer Steuerungsschaltungsanordnung (6) versehen ist, die einen Eingang vom Flüssigkeitsstandsensor und einen Ausgang zur Steuerung des elektrischen Ventils (2) aufweist;
wobei die Steuerungsschaltungsanordnung dafür ausgelegt ist, das elektrische Ventil zu öffnen, wenn der Flüssigkeitsstand im Behälter den vorbestimmten Flüssigkeitsstand erreicht oder einen höheren Flüssigkeitsstand zwischen dem maximalen Flüssigkeitsstand und dem vorbestimmten Flüssigkeitsstand erreicht hat.

2. Durchflussüberprüfungsvorrichtung nach Anspruch 1, wobei der Flüssigkeitsstandsensor einen unteren Flüssigkeitsstandsensor (52) umfasst, so dass wenn der Flüssigkeitsstandsensor erkennt, dass der Flüssigkeitsstand im Behälter (1) niedriger als der vorbestimmte Flüssigkeitsstand ist, die Steuerungsschaltungsanordnung (6) das elektrische Ventil (2) öffnen kann, bis der Flüssigkeitsstand im Behälter den höheren Flüssigkeitsstand zwischen dem maximalen Flüssigkeitsstand und dem vorbestimmten Flüssigkeitsstand erreicht.

3. Durchflussüberprüfungsvorrichtung nach Anspruch 1, wobei der Flüssigkeitsstandsensor einen oberen Flüssigkeitsstandsensor (51) umfasst, so dass wenn der Flüssigkeitsstandsensor erkennt, dass der Flüssigkeitsstand im Behälter (1) niedriger als der vorbestimmte Flüssigkeitsstand ist, die Steuerungsschaltungsanordnung (6) das elektrische Ventil (2) öffnen kann, bis der Flüssigkeitsstand im Behälter den vorbestimmten Flüssigkeitsstand erreicht.

4. Durchflussüberprüfungsvorrichtung nach Anspruch 1, wobei der Behälter (1) eine Oberseite aufweist, in der ein Luftloch (13) gebildet ist, um das Innere des Behälters mit der Atmosphäre zu verbinden.

5. Durchflussüberprüfungsvorrichtung nach Anspruch 1, wobei der Behälter (1) eine Unterseite aufweist, in der eine Öffnung (14) zum Ablassen von stehendem Wasser gebildet ist, in die auf abnehmbare Weise ein Verschlussstopfen (7) eingefügt ist.

6. Durchflussüberprüfungsvorrichtung nach Anspruch 1, ferner umfassend eine Pumpe (32), die zwischen der Wasserauslassöffnung (12) des Behälters und dem Sanitärsystem angeschlossen ist und zum Spülen des Sanitärsystems verwendet wird.

7. Durchflussüberprüfungsvorrichtung nach Anspruch 1, wobei der Überlaufkanal (4) einen Direktablaufkanal umfasst, der durch die Wand des Behälters (1) gebildet ist.

8. Durchflussüberprüfungsvorrichtung nach Anspruch 1, wobei der Überlaufkanal (4) einen Direktablaufkanal umfasst, der durch den Boden des Behälters (1) gebildet ist.

9. Durchflussüberprüfungsvorrichtung nach Anspruch 7, wobei der Überlaufkanal (4) eine Überlaufleitung (42) umfasst, die außerhalb des Behälters (1) angeordnet ist.

10. Durchflussüberprüfungsvorrichtung nach Anspruch 1, wobei der Behälter (1) mit einer Ablenkplatte (8) unter der Wassereinlassöffnung (11) versehen ist.

11. Durchflussüberprüfungsvorrichtung nach einem der Ansprüche 1 bis 10, wobei der vertikale Spalt einen vertikalen Abstand von 10 mm oder mehr hat.

12. Durchflussüberprüfungsvorrichtung nach Anspruch 11, wobei der vertikale Abstand etwa 20 mm beträgt.

## Revendications

1. Dispositif de contrôle d'écoulement qui peut être connecté entre un système sanitaire et un système d'eau courante, comprenant :
un réservoir (1) qui présente un orifice d'entrée de l'eau (11) disposé au niveau d'une partie supérieure du réservoir, et un orifice de sortie de l'eau (12) pour une communication de fluide avec le système sanitaire ;
une vanne (2) qui peut être connectée entre l'orifice d'entrée de l'eau du réservoir et le système d'eau courante (21) de façon à réguler un écoulement d'eau en provenance du système d'eau courante vers l'orifice d'entrée de l'eau du réservoir ;
un passage de trop-plein (4) qui présente une entrée de trop-plein (41) disposée à l'intérieur du réservoir de façon à définir un niveau de liquide maximum du réservoir, et une sortie de trop-plein (15) disposée à l'extérieur du réservoir ;
un détecteur de niveau de liquide (51, 52) destiné à détecter si le niveau de liquide du réservoir est inférieur à un niveau de liquide prédéterminé ; et
dans lequel il y a un intervalle vertical disposé entre l'orifice d'entrée de l'eau (12) du réservoir et l'entrée de trop-plein (41) du passage de trop-plein (4) ;
**caractérisé en ce que** la vanne est une électrovanne ;
dans lequel le détecteur de niveau de liquide est adapté de façon à détecter que le niveau de liquide du réservoir a atteint un niveau de liquide supérieur entre le niveau de liquide maximum et le niveau de liquide prédéterminé ;
et **en ce que** l'électrovanne est dotée d'un circuit de commande (6) qui présente une entrée en provenance du détecteur de niveau de liquide, et une sortie destinée à commander l'électrovanne (2) ;
dans lequel le circuit de commande est adapté de façon à ouvrir l'électrovanne si le niveau de liquide du réservoir atteint le niveau de liquide prédéterminé, ou a atteint un niveau de liquide supérieur entre le niveau de liquide maximum et le niveau de liquide prédéterminé.

2. Dispositif de contrôle d'écoulement selon la revendication 1, dans lequel le détecteur de niveau de liquide comprend un détecteur de niveau de liquide inférieur (52) de telle sorte que, lorsque le détecteur de niveau de liquide détecte que le niveau de liquide du réservoir (1) est inférieur au niveau de liquide prédéterminé, le circuit de commande (6) est adapté de façon à ouvrir l'électrovanne (2) jusqu'à ce que le niveau de liquide du réservoir atteigne ledit niveau de liquide supérieur entre le niveau de liquide maximum et le niveau de liquide prédéterminé.

3. Dispositif de contrôle d'écoulement selon la revendication 1, dans lequel le détecteur de niveau de liquide comprend un détecteur de niveau de liquide supérieur (51) de telle sorte que, lorsque le détecteur de niveau de liquide détecte que le niveau de liquide du réservoir (1) est inférieur au niveau de liquide prédéterminé, le circuit de commande (6) est adapté de façon à ouvrir l'électrovanne (2) jusqu'à ce que le niveau de liquide du réservoir atteigne le niveau de liquide prédéterminé.

4. Dispositif de contrôle d'écoulement selon la revendication 1, dans lequel le réservoir (1) présente un dessus formé avec un évent (13) destiné à faire communiquer l'intérieur du réservoir avec l'atmosphère.

5. Dispositif de contrôle d'écoulement selon la revendication 1, dans lequel le réservoir (1) présente un fond formé avec un orifice de vidange de l'eau stagnante (14) inséré de manière amovible avec un bouchon d'étanchéité (7).

6. Dispositif de contrôle d'écoulement selon la revendication 1, comprenant en outre une pompe (32) connectée entre l'orifice de sortie de l'eau (12) du réservoir et le système sanitaire, et utilisée de façon à faire couler l'eau dans le système sanitaire.

7. Dispositif de contrôle d'écoulement selon la revendication 1, dans lequel le passage de trop-plein (4) comprend un passage de vidange direct formé à travers la paroi du réservoir (1).

8. Dispositif de contrôle d'écoulement selon la revendication 1, dans lequel le passage de trop-plein (4) comprend un passage de vidange direct formé à travers le fond du réservoir (1).

9. Dispositif de contrôle d'écoulement selon la revendication 7, dans lequel le passage de trop-plein (4) comprend un conduit de trop-plein (42) disposé à l'extérieur du réservoir (1).

10. Dispositif de contrôle d'écoulement selon la revendication 1, dans lequel le réservoir (1) est doté d'un déflecteur (8) situé sous l'orifice d'entrée de l'eau (11).

11. Dispositif de contrôle d'écoulement selon l'une quelconque des revendications 1 à 10, dans lequel l'intervalle vertical est une distance verticale égale ou supérieure à 10 mm.

12. Dispositif de contrôle d'écoulement selon la revendication 11, dans lequel la distance verticale est approximativement égale à 20 mm.
